# EUROPEAN PATENT APPLICATION

(11) **EP 3 468 305 A1**
(43) Date of publication of application: **10.04.2019**
(21) Application number: 17805682.6
(22) Date of filing: 19.05.2017
(51) Int. Cl.: H05B 37/02

(54) **BLUETOOTH CEILING LAMP**

(30) Priority: 30.05.2016 CN 201620514795 U
(71) Applicant: Shenzhen JBT Smart Lighting Co., Ltd., Shenzhen, Guangdong 518104 (CN)
(72) Inventor: ZHANG, Wenbin, Shenzhen, Guangdong 518104 (CN); CHEN, Huiping, Shenzhen, Guangdong 518104 (CN); GUO, Guangli, Shenzhen, Guangdong 518104 (CN); HUANG, Xin, Shenzhen, Guangdong 518104 (CN); PENG, Zhiguang, Shenzhen, Guangdong 518104 (CN)
(74) Representative: Michalski Hüttermann & Partner Patentanwälte mbB
(86) International application number: PCT/CN2017/085121
(87) International publication number: WO 2017/206737

(57) **Abstract**

A Bluetooth ceiling lamp (100) comprises: a ceiling lamp housing assembly (1); a control module (2), disposed in the ceiling lamp housing assembly (1); a Bluetooth mesh module (3), used for receiving an external control signal by means of Bluetooth and coupled to the control module (2); a light emitting unit (4), disposed in the ceiling lamp housing assembly (1); and a Bluetooth control circuit (5), used for controlling the light emitting component (2), and coupled to the control module (2) and the light emitting component (4). In the technical solution, by means of a Bluetooth wireless control technology, remote brightness adjustment, color adjustment, timing, splendid colors with music, profiles and other functions are implemented on the ceiling lamp, thereby bringing convenience to the life of the people, and increasing the variety and the enjoyment of smart home lighting.

## Description

### TECHNICAL FIELD

The present disclosure relates to the technical field of bluetooth lighting, and more particularly, to a bluetooth ceiling lamp.

### BACKGROUND ART

With the popularity of LED technology, more and more LED lights are used in people's life. Currently on the market, almost all wireless dimming and color temperature adjusting remote controllers employ radio frequency control technology, which has a weak anti-interference ability, networking inconvenience, mediocre reliability, and cannot achieve scenario modes, music-controlling colors, and other functions. Moreover, in conventional art, there is a technical bottleneck in integrating the lighting function of the light and the bluetooth communication function.

### SUMMARY

An object of the present disclosure is to provide a bluetooth ceiling lamp to solve the difficulty of realizing a remote diversification operation of the lights and the technical bottleneck in integrating the lighting function of the light and the bluetooth communication function in conventional art.

The technical solution of the present disclosure is implemented as follows:
The present disclosure provides a bluetooth ceiling lamp comprises:
a ceiling light housing assembly;
a control module disposed inside the ceiling light housing assembly;
a bluetooth mesh module configured for receiving external control signal through bluetooth, the bluetooth mesh module is coupled to the control module;
a light-emitting unit disposed inside the ceiling light housing assembly; and
a bluetooth control circuit configured for controlling the light-emitting unit, the bluetooth control circuit is coupled to the control module and the light-emitting unit.

The bluetooth ceiling lamp of the present disclosure further comprises:
a power drive module configured for accessing to a city power and providing a direct-current, coupled to the light-emitting unit;
a bluetooth power supply module configured for reducing a voltage of the direct-current of the power drive module, coupled to the power drive module and the bluetooth control circuit.

In the bluetooth ceiling lamp of the present disclosure, the ceiling light housing assembly comprises a ceiling light housing, a light board, a power housing and a ceiling light mask, wherein
the ceiling light housing is fixedly connected to the ceiling light mask to form a cavity, the light board and the power housing are disposed inside the cavity, the light board and the power housing are fixedly connected to the inner surface of the ceiling light housing;
the control module, the bluetooth mesh module and the bluetooth control circuit are all disposed inside the power housing, the light-emitting unit is disposed on the light board.

In the bluetooth ceiling lamp of the present disclosure, the bluetooth control circuit comprises:
a first bluetooth welding plate which is coupled to a plurality of pins of the control module and is coupled to the bluetooth power supply module;
a plurality of MOS tubes which are respectively coupled to a plurality of terminals of the first bluetooth welding plate;
a second bluetooth welding plate which is coupled to the light-emitting unit, and the plurality of MOS tubes are respectively coupled to a plurality of terminals of the second bluetooth welding plate.

In the bluetooth ceiling lamp of the present disclosure, the light-emitting unit comprises an unit-welding plate, a plurality of cold color temperature LED monochromatic lamps, a plurality of warm color temperature LED monochromatic lamps and a plurality of RGB lamps;
each RBG lamp has an R lamp, a G lamp and a B lamp;
the unit-welding plate contains a plurality of cathode terminals and one anode terminal, the plurality of cathode terminals and the anode terminal are respectively coupled to the second bluetooth welding plate; the plurality of cathode terminals and the anode terminal are respectively coupled to an end of the plurality of cold color temperature LED monochromatic lamps, the plurality of warm color temperature LED monochromatic lamps, a plurality of R lamps, a plurality of G lamps and a plurality of B lamps; the anode terminal is coupled to the power drive module and is coupled to another end of the plurality of cold color temperature LED monochromatic lamps, the plurality of warm color temperature LED monochromatic lamps, a plurality of R lamps, a plurality of G lamps and a plurality of B lamps.

The bluetooth ceiling lamp of the present disclosure further comprises:
an radio frequency module which is coupled to the control module.

In the bluetooth ceiling lamp of the present disclosure, the radio frequency module comprises:
a radio frequency circuit which is coupled to the control module;
a radio frequency antenna which is coupled to the radio frequency antenna.

In the bluetooth ceiling lamp of the present disclosure, the power drive module comprises:
an alternating-current input end for accessing to a city power;
an rectifier circuit which is coupled to the alternating-current input end;
a filter circuit which is coupled to the rectifier circuit;
a drive control circuit which is coupled to the filter circuit;
a direct-current output circuit which is coupled to the drive control circuit.

In the bluetooth ceiling lamp of the present disclosure, the bluetooth power supply module comprises:
a buck circuit which is coupled to the direct-current output circuit;
a regulator circuit which is coupled to the bluetooth control module.
Therefore, the beneficial effects of the present disclosure is achieving functions such as the remote adjusting of brightness, remote adjusting of color, timing, colors changing along with music and setting profiles through bluetooth wireless control technology to facilitate people's life and increase the diversity and delight of intelligent home lighting.

### BRIEF DESCRIPTION OF THE DRAWINGS

The present disclosure will be further described with reference to the accompanying drawings and embodiments, and in the accompanying drawings:
FIG. 1 is a module block diagram of a bluetooth ceiling lamp provided by the present disclosure;
FIG. 2 is a schematic diagram of connecting of a control module provided by the present disclosure;
FIG. 3 is a schematic structural view of a bluetooth control circuit provided by the present disclosure;
FIG. 4 is a schematic structural view of a light-emitting unit provided by the present disclosure;
FIG. 5 is a schematic structural view of a power drive module provided by the present disclosure;
FIG. 6 is a schematic structural view of a bluetooth power supply module provided by the present disclosure;
FIG. 7 is a schematic structural view of a ceiling light housing assembly provided by the present disclosure.

### DETAILED DESCRIPTION

For a clearer understanding of the technical features, objectives and effects of the present disclosure, the specific embodiments of the present disclosure will be described in detail below with reference to the accompanying drawings. It should be understood that the following descriptions are merely specific descriptions of the embodiments of the present disclosure, and should not be used to limit the protection scope of the present disclosure.

The present disclosure provides a bluetooth ceiling lamp 100 to achieve functions of networking freely through using bluetooth mesh control technology in LED ultra thin ceiling light, and achieve the ability of remote control functions such as adjusting the brightness, the color and colors changing along with the music through a terminal intelligent remote controller or remoter, which meets different people's need, and is of high operability and good experience.

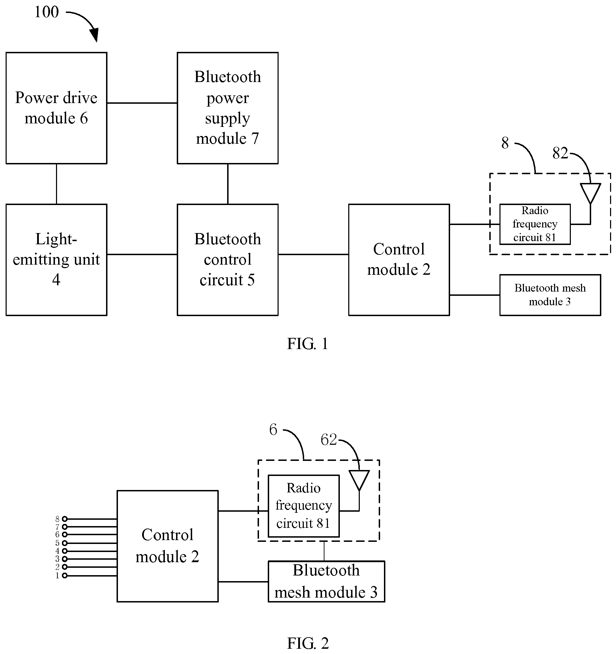

Referring to FIG. 1, a module block diagram of a bluetooth ceiling lamp 100 provided by the present disclosure, the bluetooth ceiling lamp 100 comprises a ceiling light housing assembly 1, a control module 2, a bluetooth mesh module 3, a light-emitting unit 4, a bluetooth control circuit 5, a power drive module 6 and a bluetooth power supply module7.

The control module 2 is disposed inside the ceiling light housing assembly 1.

The bluetooth mesh module 3 is configured for receiving external signal by bluetooth is coupled to the control module 2.

The light-emitting unit 4 is disposed inside the ceiling light housing assembly.

The bluetooth control circuit 5 configured for controlling the light-emitting unit 4 is coupled to the control module 2 and the light emitting unit 4.

The power drive module 6 configured for accessing to a city power and providing a direct-current is coupled to the light-emitting unit 4.

The bluetooth power supply module 7 configured for reducing a voltage of the direct-current of the power drive module 6 is coupled to the power drive module 6 and the bluetooth control circuit 5.

Referring to FIG. 2, which is a schematic connecting diagram of the control module 2 provided by the present disclosure, the control module 2 includes eight output pins, and is connected to a radio frequency module 8 and the bluetooth mesh module 3. The control module 2 is preferably internally installed with a 16KB data memory (SRAM), and is embedded with a 32-bit high-performance MCU and a maximum 48MHz clock signal. Powerful storage capabilities are able to provide sufficient capacity to input control programs and to achieve rich and varied control functions.

The radio frequency module 8 comprises a radio frequency circuit 81 and a radio frequency antenna 82. The radio frequency circuit 81 is coupled to the control module 2; the radio frequency antenna 82 is coupled to the radio frequency circuit 81.

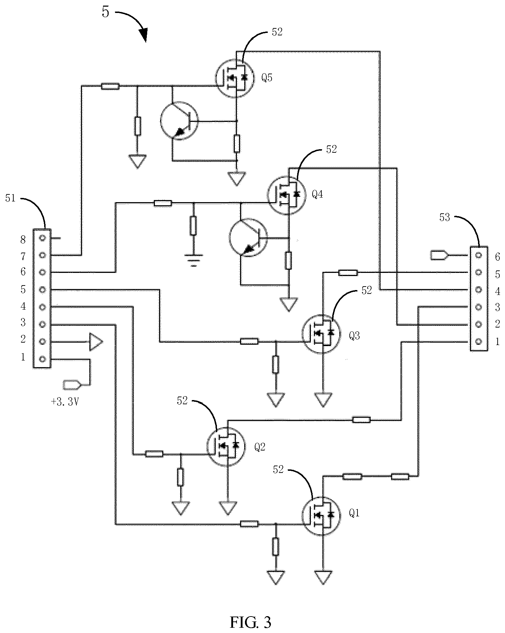

Referring to FIG. 3, which is a schematic structural view of a bluetooth control circuit 5 provided by the present disclosure, the bluetooth control circuit 5 comprises a first bluetooth welding plate 51, a plurality of MOS tubes 52 and a second bluetooth welding plate 53.

The first bluetooth welding plate 51 is coupled to a plurality of pins of the control module 2 and is coupled to the bluetooth power supply module 7; the first bluetooth welding plate 51 also includes eight terminals which are respectively connected to eight pins of the control module 2, wherein the terminal 1 of the first bluetooth welding plate 51 is connected to the bluetooth power supply module 7 to input a +3.3V voltage.

The plurality of MOS tubes 52 are respectively coupled to a plurality of terminals the first bluetooth welding plate 51, the plurality of MOS tubes 52 are shown as Q1-Q5 in FIG. 3.

The second bluetooth welding plate 53 is coupled to the light-emitting unit 4, the plurality of MOS tubes 52 are respectively coupled to a plurality of terminals of the second bluetooth welding plate 53. Q1-Q5 are connected to terminals 1-5 of the second bluetooth welding plate 53, the terminal 6 is connected to the power drive module 66 to access operating voltage.

The circuit function of the bluetooth control circuit 5 is that, an internal MCU (i.e., the control module 2) receives the instruction of the intelligent terminal device after the bluetooth control circuit 5 is on; and the control module 2 outputs five PWM brightness adjusting, color adjusting, and RGB signals to control on and off time periods of the five MOSs Q1, Q2, Q3, Q4, Q5.

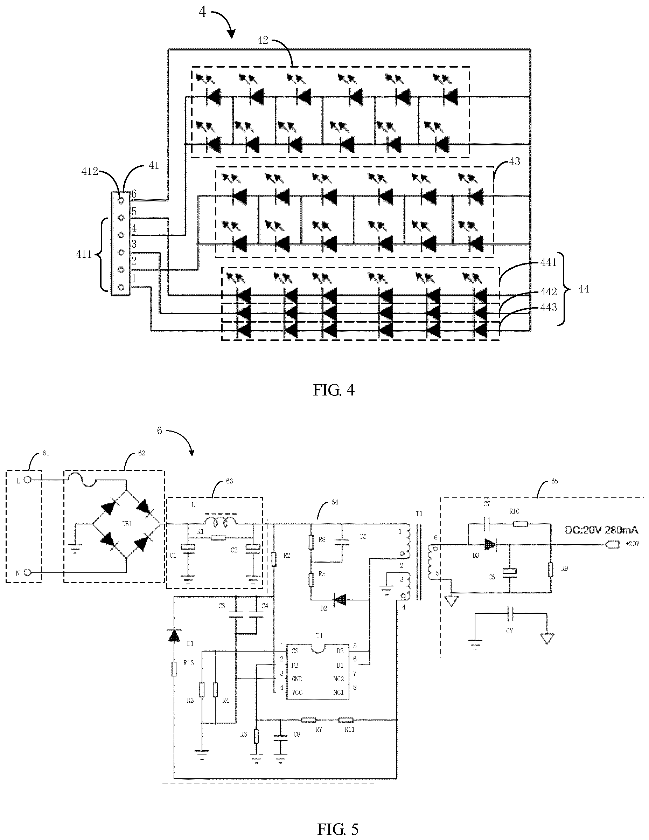

Referring to FIG. 4, which is a schematic structural view of the light-emitting unit 4 provided by the present disclosure, the light-emitting unit 4 comprises an unit-welding plate 41, a plurality of cold color temperature LED monochromatic lamps 42, a plurality of warm color temperature LED monochromatic lamps 43 and a plurality of RGB lamps 44.

Each RBG lamp 44 has an R lamp 441, a G lamp 442 and a B lamp 443. The unit-welding plate 41 contains a plurality of cathode terminals 411 and one anode terminal 412. The plurality of cathode terminals 411 and the anode terminals 412 are respectively coupled to the second bluetooth welding plate 53. The plurality of cathode terminals 411 and the anode terminal 412 are respectively coupled to an end of the plurality of cold color temperature LED monochromatic lamps 42, the plurality of warm color temperature LED monochromatic lamps 43, the plurality of R lamps 441, the plurality of G lamps 442 and the plurality of B lamps 443. The anode terminal 412 is coupled to the power drive module 6 and is coupled to another end of the plurality of cold color temperature LED monochromatic lamps 42, the plurality of warm color temperature LED monochromatic lamps 43, the plurality of R lamps 441, the plurality of G lamps 442 and the plurality of B lamps 443. Terminals 1-5 (i.e., cathode terminal 411) of the unit-welding plate 41 are connected to terminals 1-5 of the second bluetooth welding plate 53. Terminal 6 (i.e., anode terminal 412) of the unit-welding plate 41 is connected to terminal 6 of the second bluetooth welding plate 53 to access an operating voltage.

Among them, five drains of the MOS tubes 52 are respectively connected to a cathode of the R lamp 441, the G lamp 442, the B lamp 443, the warm color temperature LED monochromatic lamp 42 and the cold color temperature LED monochromatic lamp 43 loaded on an ultra thin ceiling light. An anode of the light-emitting unit 4 is directly connected to an output positive electrode of the power drive module 6. The bluetooth control circuit 5 controls the working state of each LED strip by receiving instructions from an intelligent terminal device so as to control changes of output color temperature, brightness, and colors of the LED to realize an adjustment of brightness and color.

The light-emitting unit 4 is stuck on the flexible PCB board and is adhered to the inner wall of the ultra thin ceiling light by adhesive thermal conductive silicone. Preferably, the light-emitting unit 4 is disposed on the inner wall of the light board 12 and realize side light emission through a light guide plate 14, a reflecting paper 15 and a spongy cushion 16. The light-emitting unit 4 is composed of 6PIN RGB lamp beads in model 3528 and a single 0.2W white lamp bead in model 2835.

Referring to FIG. 5, which is a schematic structural view of a power drive module 6 provided by the present disclosure, the power drive module 6 comprises an alternating-current input end 61, an rectifier circuit 62, a filter circuit 63, a drive control circuit 64 and a direct-current output circuit 65.

The alternating-current input end 61 is configured for accessing to 200-240V city power.

The rectifier circuit 62 is coupled to the alternating-current input end 61.

The filter circuit 63 is coupled to the rectifier circuit 62.

The drive control circuit 64 is coupled to the filter circuit 63.

The direct-current output circuit 65 is coupled to the drive control circuit 64.

U1 in the drive control circuit 64 is an integrated packaged isolated LED driver control IC, the model of which is FT838MBD. The circuit formed by U1 is a post-stage circuit (i.e., the direct-current output circuit 65) providing stable output of voltage and current. Detailed working process is that, when an entire power supply is connected to a 220V AC (alternating-current) city power, the current is rectified by the bridge DB1 (i.e., the rectifier circuit 62) and then passes through the π-type filter composed of C1, C2, and L1. Since a switch tube is integrated inside the drive control circuit 64, an inner logic circuit in the drive control circuit 64 control the on-and-off of the switch tube. A transformer achieves a conversion of electromagnetic energy. A stable output of voltage and current is achieved through drive control circuit 64.

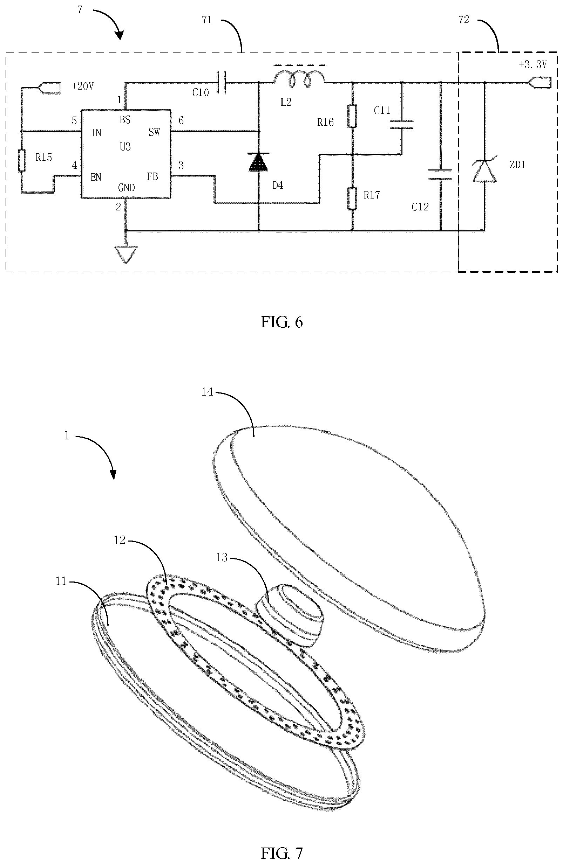

Referring to FIG. 6, which is a schematic structural view of a bluetooth power supply module 7 provided by the present disclosure, the bluetooth power supply module 7 comprises a buck circuit 71 and a regulator circuit 72.

The buck circuit 71 is coupled to the direct-current output circuit 65.

The regulator circuit 72 is coupled to the bluetooth control module 5.

The model of U3 in the buck circuit 71 is SI3116. A function of the buck circuit 71 is to reduce a 20V voltage to constant 3.3V voltage. In addition, there is a 3.3V zener diode ZD1 to more accurately supply power to the bluetooth module. A general work process of the circuit is as follow: when pin 5 on U3 is electrified, the U3 starts to work, and a divider resistor externally connected to pin 3 and pin FB is used to adjust duty cycle, which is to regulate output voltage to 3.3V D4 in a peripheral circuit of U3 is a free-wheeling diode, and a electrolytic capacitor C12 is configured for providing energy.

Referring to FIG. 7, which is a schematic structural view of a ceiling light housing assembly 1 provided by the present disclosure, the ceiling light housing assembly 1 comprises a ceiling light housing 11, a light board 12, a power housing 13 and a ceiling light mask 14, wherein,

the ceiling light housing 11 is fixedly connected to the ceiling light mask 14 to form a cavity, the light board 12 and the power housing 13 are disposed inside the cavity, the light board 12 and the power housing 13 are fixedly connected to the inner surface of the ceiling light housing 14;

the control module 2, the bluetooth mesh module 3 and the bluetooth control circuit 5 are all disposed inside the power housing 13, the light-emitting unit 4 is disposed on the light board 12.

Various operations of the embodiments are provided herein. In one embodiment, one or the described operations may constitute one or computer-readable instructions stored in a computer-readable medium that, when executed by an electronic device, will cause the computing device to perform the described operations. The order in which some or all of the operations are described should not be construed as to imply that the operations must be order dependent. Those skilled in the art will understand an alternative ordering that has the benefit of this description. Moreover, it should be understood that not all operations need to be present in every embodiment provided herein.

Moreover, the term "preferred" as used herein is intended to serve as an example, embodiment, or illustration. Any aspect or design described as "preferred" need not be construed as advantageous over other aspects or designs. In contrast, the use of the term "preferred" is intended to provide concepts in a concrete manner. The term "or" as used in this application is intended to mean an inclusive "or" rather than an exclusive "or." That is, unless specified otherwise or clear from the context, "X employs A or B" means naturally include any one of the permutations. That is, "X using A or B" is satisfied in any of the foregoing examples if X uses A; X uses B; or X uses both A and B.

Moreover, while the disclosure has been shown and described with respect to one or more implementations, those skilled in the art will readily recognize that modifications and adaptations are based on a reading and understanding of the specification and drawings. The disclosure includes all such modifications and variations, and is limited only by the scope of the claims. In particular regard to the various functions performed by the above described components (e.g., elements, resources, etc.), the terms used to describe such components are intended to correspond with the specified functions (e.g., that are functionally equivalent) that perform the components. Any of the components, unless otherwise indicated, are structurally identical to the disclosed structure that performs the functions in the exemplary implementations of the present disclosure shown herein. In addition, while a particular feature of the disclosure may have been disclosed with respect to only one of several implementations, such feature may be other than one or other features of other implementations as may be desirable and advantageous for a given or particular application combination. Also, to the extent that the terms "include", "have", "comprise" or variations thereof are used in either the detailed description or the claims, such terms are intended to be inclusive in a similar manner to the term "comprising."

In summary, although the present disclosure has been disclosed by the preferred embodiments, the above preferred embodiments are not intended to limit the present disclosure. Those skilled in the art may make various modifications without departing from the spirit and scope of the present disclosure. Therefore, the protection scope of the present disclosure is subject to the scope defined by the claims.

## Claims

1. A bluetooth ceiling lamp, **characterized by** comprising:
a ceiling light housing assembly;
a control module disposed inside the ceiling light housing assembly;
a bluetooth mesh module configured for receiving external control signal through bluetooth, the bluetooth mesh module is coupled to the control module;
a light-emitting unit disposed inside the ceiling light housing assembly; and
a bluetooth control circuit configured for controlling the light-emitting unit, the bluetooth control circuit is coupled to the control module and the light-emitting unit.

2. The bluetooth ceiling lamp of claim 1, **characterized by** further comprising:
a power drive module configured for accessing to a city power and providing a direct-current, coupled to the light-emitting unit;
a bluetooth power supply module configured for reducing a voltage of the direct-current of the power drive module, coupled to the power drive module and the bluetooth control circuit.

3. The bluetooth ceiling lamp of claim 1, **characterized in that** the ceiling light housing assembly comprises a ceiling light housing, a light board, a power housing and a ceiling light mask, wherein
the ceiling light housing is fixedly connected to the ceiling light mask to form a cavity, the light board and the power housing are disposed inside the cavity, the light board and the power housing are fixedly connected to the inner surface of the ceiling light housing;
the control module, the bluetooth mesh module and the bluetooth control circuit are all disposed inside the power housing, the light-emitting unit is disposed on the light board.

4. The bluetooth ceiling lamp of claim 2, **characterized in that** the bluetooth control circuit comprises:
a first bluetooth welding plate which is coupled to a plurality of pins of the control module and is coupled to the bluetooth power supply module;
a plurality of MOS tubes which are respectively coupled to a plurality of terminals of the first bluetooth welding plate;
a second bluetooth welding plate which is coupled to the light-emitting unit, and the plurality of MOS tubes are respectively coupled to a plurality of terminals of the second bluetooth welding plate.

5. The bluetooth ceiling lamp of claim 4, **characterized in that** the light-emitting unit comprises an unit-welding plate, a plurality of cold color temperature LED monochromatic lamps, a plurality of warm color temperature LED monochromatic lamps and a plurality of RGB lamps;
each RBG lamp has an R lamp, a G lamp and a B lamp;
the unit-welding plate contains a plurality of cathode terminals and one anode terminal, the plurality of cathode terminals and the anode terminal are respectively coupled to the second bluetooth welding plate; the plurality of cathode terminals and the anode terminal are respectively coupled to an end of the plurality of cold color temperature LED monochromatic lamps, the plurality of warm color temperature LED monochromatic lamps, a plurality of R lamps, a plurality of G lamps and a plurality of B lamps; the anode terminal is coupled to the power drive module and is coupled to another end of the plurality of cold color temperature LED monochromatic lamps, the plurality of warm color temperature LED monochromatic lamps, a plurality of R lamps, a plurality of G lamps and a plurality of B lamps.

6. The bluetooth ceiling lamp of claim 1, **characterized by** further comprising an radio frequency module which is coupled to the control module.

7. The bluetooth ceiling lamp of claim 6, **characterized in that** the radio frequency module comprises:
a radio frequency circuit which is coupled to the control module;
a radio frequency antenna which is coupled to the radio frequency antenna.

8. The bluetooth ceiling lamp of claim 3, **characterized in that** the power drive module comprises:
an alternating-current input end for accessing to a city power;
a rectifier circuit which is coupled to the alternating-current input end;
a filter circuit which is coupled to the rectifier circuit;
a drive control circuit which is coupled to the filter circuit;
a direct-current output circuit which is coupled to the drive control circuit.

9. The bluetooth ceiling lamp of claim 8, **characterized in that** the bluetooth power supply module comprises:
a buck circuit which is coupled to the direct-current output circuit;
a regulator circuit which is coupled to the bluetooth control module.
